**Europäisches Patentamt**

**European Patent Office**

**Office européen des brevets**

(19)

(11) Veröffentlichungsnummer: **0 246 509**
**B1**

(12) **EUROPÄISCHE PATENTSCHRIFT**

(45) Veröffentlichungstag der Patentschrift:
**16.08.89**

(51) Int. Cl.⁴: **F 16 B 12/20**

(21) Anmeldenummer: **87106674.2**

(22) Anmeldetag: **08.05.87**

(54) **Steckverbindung und Informationstafel mit Steckverbindung.**

(30) Priorität: **13.05.86 DE 3616031**

(43) Veröffentlichungstag der Anmeldung:
**25.11.87 Patentblatt 87/48**

(45) Bekanntmachung des Hinweises auf die Patenterteilung:
**16.08.89 Patentblatt 89/33**

(84) Benannte Vertragsstaaten:
**AT BE CH DE FR GB IT LI NL**

(56) Entgegenhaltungen:
**FR-A- 2 515 016**
**GB-A- 2 139 295**
**US-A- 3 589 755**
**US-A- 3 589 758**

(73) Patentinhaber: **Weyel KG, Rodenbacher Strasse**
**Postfach 68, D-6342 Haiger/Hessen (DE)**

(72) Erfinder: **Weyel, Karl Hermann, Ringstrasse 20,**
**D-6342 Haiger (DE)**
Erfinder: **Winn, Klaus, Waldweide 66, D-6300 Giessen**
**(DE)**
Erfinder: **Engelbach, Karl Ludwig, Erlenstrasse 18,**
**D-6340 Dillenburg 2 (DE)**

(74) Vertreter: **Missling, Arne, Dipl.-Ing., Patentanwälte**
**Dipl.-Ing. R. Schlee Dipl.-Ing. A. Missling**
**Bismarckstrasse 43, D-6300 Giessen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Steckverbindung gemäß dem Oberbegriff von Anspruch 1 und auf eine Informationstafel gemäß dem Oberbegriff von Anspruch 12.

Insbesondere zur Verbindung von tafelförmigen Körpern mit Pfosten sind sogenannte T-Nut-Verbindungen bekannt. Diese bestehen aus an Pfosten angeordneten Profilen mit C-förmigem Querschnitt und aus an den Seitenkanten des tafelförmigen Körpers befestigten T-förmigen Profilen, die in Längsrichtung in die C-Profile einschiebbar sind. Zum Zusammenfügen wird oberhalb der Pfosten viel Raum benötigt, nämlich eine Raumhöhe, die mindestens gleich der Höhe des tafelförmigen Körpers ist. Auch ist ein völlig wackelfreier Sitz nicht erzielbar wegen des notwendigerweise relativ großen Spiels zwischen den Profilen.

Für den gleichen Zweck setzt man Verbindungen mit winkelförmigen Schlitzen ein, in die von dem tafelförmigen Körper seitlich abragende Bolzen eingehängt werden. Um auch in Bolzenlängsrichtung eine Arretierung zu erhalten, hat der Bolzen eine Ringnut, deren Innendurchmesser nur wenig kleiner als die Winkelschlitz-Breite und deren Breite nur wenig größer ist als die Dicke der Wand, die den Winkelschlitz enthält. Ein einigermaßen wackelfreier Sitz läßt sich nur mit engen Passungen erreichen, wodurch die Montage erschwert wird. Vorteilhaft im Vergleich mit einer T-Nut-Verbindung ist, daß oberhalb der Pfosten nur wenig Raum benötigt wird. Es genügt eine Höhe etwa gleich der Länge des vertikalen Teils des Winkelschlitzes.

Ähnliche Probleme wie bei Verbindungen mit Winkelschlitzen entstehen bei ebenfalls bekannten Verbindungen mit schlüssellochförmigen Durchbrüchen.

Zur Verbindung von tafelförmigen Körpern mit Pfosten hat man auch Durchgangsschrauben verwendet. Diese werden durch Löcher am tafelförmigen Körper und am Pfosten hindurchgesteckt, die sich an besonderen Befestigungslappen oder Befestigungsleisten befinden. Diese Verbindungsart ist arbeitsaufwendig und für das Aussehen der Informationstafel nachteilig.

Eine Verbindung der eingangs genannten Art ist aus der US-A-3 589 755 bekannt. Für senkrechte Wände insbesondere von Gebäuden aus Fertigbauteilen sind hierbei komplementere Doppelkeile vorgesehen, deren Keilflächen durch eine Steckbewegung zur Anlage aneinander bringbar sind, wobei mindestens ein Keil relativ zu zwei winklig zueinander stehenden Arretierungsflächen feststehend angeordnet ist. Hierbei schiebt sich jeweils der Keil des beweglichen Bauelements über denjenigen des feststehenden Bauteils. Die Verkeilung erfolgt je nach Herstellungstoleranzen in lediglich einer Richtung; quer zu dieser kann Bewegungsspiel vorhanden sein, so daß ein völlig wackelfreier Sitz nur mit extrem engen Passungen erreichbar wäre.

Der Erfindung liegt die Aufgabe zugrunde, eine Steckverbindung zu schaffen, die mit einer kurzen Bewegung zusammenfügbar ist und einen wackelfreien Sitz ergibt. Sie soll insbesondere, jedoch nicht ausschließlich, zur Verwendung an einer Informationstafel geeignet sein.

Die erfindungsgemäße Steckverbindung ist gemäß dem kennzeichnenden Teil von Anspruch 1 so ausgebildet, daß die Keilfläche mit jeder der beiden Arretierungsflächen einen spitzen Winkel einschließt, wobei in der Verriegelungsstellung der relativ zu den beiden Arretierungsflächen bewegliche Keil mit an ihm befindlichen Anlageflächen an den Arretierungsflächen anliegt.

Bei einer so ausgebildeten Steckverbindung bewirken die Keilflächen infolge ihrer besonderen Lage relativ zu den Arretierungsflächen, daß der eingeführte Keil gegen beide Arretierungsflächen gezogen wird. Dadurch wird ein absolut wackelfreier Zusammenhalt der Keile und damit der mit ihm verbundenen Teile erzielt. Hierbei kann beispielsweise ein Keil an einem tafelförmigen Körper und der andere Keil an einem Pfosten angeordnet sein. Die Steckverbindung läßt sich mit einer kurzen Schiebebewegung zusammenfügen, so daß für die Herstellung der Verbindung nur wenig Raum zur Verfügung stehen muß.

Die beiden spitzen Winkel können bezüglich der beiden Arretierungsflächen gleich sein (Anspruch 2). Dies ist jedoch keine notwendige Bedingung. Die Keilflächen können auch so orientiert sein, daß die Winkel relativ zu den beiden Arretierungsflächen verschieden sind. Die Winkel können auch in weiten Grenzen variieren. Vorteilhaft sind die im Anspruch 3 angegebenen Winkel. Auch die Arretierungsflächen können verschiedene Winkel miteinander einschließen. Besonders zweckmäßig ist es, wenn die Arretierungsflächen rechtwinklig zueinander stehen (Anspruch 4).

Gemäß einer vorteilhaften Ausführungsform der Erfindung (Anspruch 5) sind die Keile mit Profilen verbunden, die Arretierungsflächen bilden. Diese Profile können dann wiederum mit Teilen verbunden sein, z.B. verschraubt sein, also z.B. mit einem tafelförmigen Körper und einem Pfosten. Die Profile können sich zu einem Kanal ergänzen, in dem die Keile liegen (Anspruch 6). Dadurch ist die Verbindung geschützt untergebracht und unsichtbar, was für das Aussehen der Gesamtkonstruktion vorteilhaft ist. Besonders zweckmäßig für die Bildung eines Kanals sind Profile von winkelförmigem Querschnitt (Anspruch 7), wobei auch eine Art Labyrinthverschluß gemäß Anspruch 8 vorgesehen sein kann.

Die Keile bestehen vorteilhafterweise aus Metallprofilen (Anspruch 9). Zwei zusammenwirkende Keile können durch einen schief zur Längsrichtung des Profils verlaufenden Schnitt hergestellt werden.

Gemäß einer weiteren Ausgestaltung der Erfindung (Ansprüche 10 und 11) ist ein Arretierungsstift vorgesehen. Diese Ergänzung ist dann zweckmäßig, wenn die durch die Steckverbindung verbundenen Teile gegeneinander gesichert werden sollen. Es gibt jedoch auch Anwendungsfälle, wo eine solche besondere Sicherung nicht nötig ist.

In den Ansprüchen 12 bis 15 ist eine Informationstafel definiert, die mit Hilfe von Steckverbindungen der zuvor beschriebenen erfindungsgemäßen Beschaffenheit hergestellt ist. Es ist dabei vorteilhaft, jeweils zwei Steckverbindungen an einer Kante des tafelförmigen Körpers vorzusehen, der den Informationsträger bildet (Anspruch 13). Man erreicht dadurch eine genaue Ausrichtung des Informationsträgers und eine geringe Belastung der einzelnen Steckverbindung.

Besonders gut geeignet sind Steckverbindungen mit zugeordneten Profilen, wobei die Profile den zu verbindenden Teilen gemäß Anspruch 14 zugeordnet sind. Schrauben, mit denen die Keile an den Profilen gehalten sind, können gemäß Anspruch 15 zugleich dazu dienen, die Profile an den Pfosten bzw. dem Informationsträger zu befestigen.

Die Erfindung wird anhand der beigefügten Zeichnung, die ein Ausführungsbeispiel zeigt, weiterhin erläutert. Im einzelnen zeigen:

Fig. 1 eine Informationstafel in Vorderansicht gemäß dem Pfeil I in Fig. 2,

Fig. 2 eine Draufsicht auf die Informationstafel in Richtung des Pfeiles II in Fig. 1,

Fig. 3 einen Teilschnitt nach Linie III-III in Fig. 1 in einem gegenüber Fig. 1 vergrößerten Maßstab,

Fig. 4 einen vergrößerten Ausschnitt aus Fig. 1 im Bereich des strichpunktierten Rahmens IV in Fig. 1, wobei eine Steckverbindung im vertikalen Schnitt dargestellt ist,

Fig. 5 eine Ansicht auf die Stirnseite einer Informationstafel entsprechend den Pfeilen V-V in Fig. 4,

Fig. 6 eine teilweise Seitenansicht eines Pfostens entsprechend den Pfeilen VI-VI in Fig. 4,

Fig. 7 einen horizontalen Schnitt nach Linie VII-VII in Fig. 4 und

Fig. 8 bis 13 in verschiedenen Ansichten (Fig. 8 bis 11) und Schnitten (Fig. 12, 13) einen einzelnen Keil.

Die insgesamt mit I bezeichnete Informationstafel hat drei tafelförmige Informationsträger $T_1$, $T_2$, $T_3$ und Pfosten $P_1$, $P_2$, an denen die Informationsträger $T_1$, $T_2$, $T_3$ mittels Steckverbindungen befestigt sind. Jeder Informationsträger $T_1$, $T_2$, $T_3$ ist an jeder seiner Seitenkanten mit zwei Steckverbindungen gehalten. Zu jeder Steckverbindung gehören zwei zusammenwirkende, für sich zueinander spiegelbildliche Keile 1, 2. Zunächst soll ein Keil anhand der Fig. 8 bis 13 betrachtet werden; angenommen sei Keil 1.

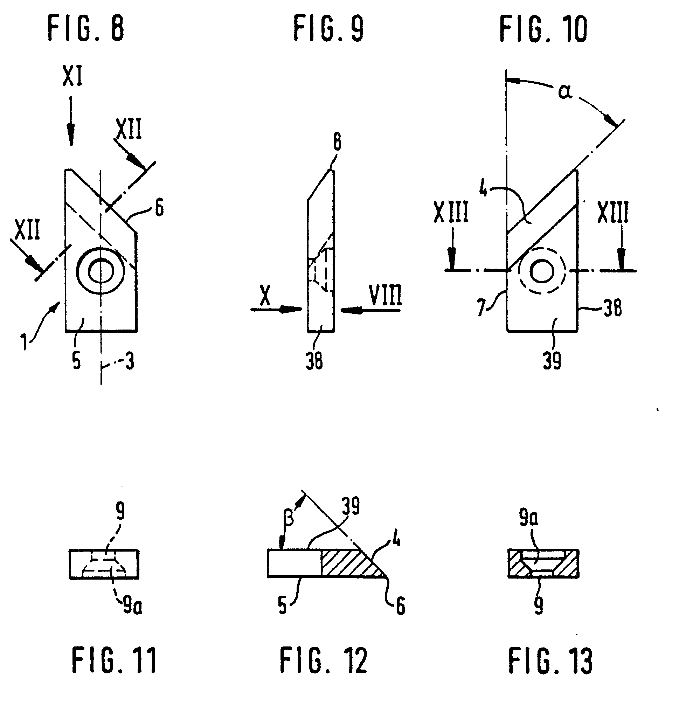

Der Keil 1 hat einen Körper von rechteckigem Querschnitt, welcher Querschnitt aus den Fig. 11 und 13 ersichtlich ist. Die Längsachse des Keilkörpers ist mit 3 bezeichnet; schräg dazu verläuft die Keilfläche 4. Sie bildet mit der Breitfläche 5 des Keilkörpers eine Schneide 6, die unter einem spitzen Winkel $\alpha$ zu der Schmalseite 7 des Keilkörpers geneigt ist. Der Winkel $\alpha$ ist im dargestellten Fall 45°. Die insgesamt ebene Keilfläche ist weiterhin so geneigt, daß sie in einer Schnittebene XII-XII rechtwinklig zu der Schneide 6 verläuft und außerdem einen Winkel $\beta$ mit der Breitseite 5 einschließt. Auch der Winkel $\beta$ beträgt im gezeichneten Ausführungsbeispiel 45°. Durch die Anschrägung mit der Keilfläche 4 würde eine Spitze entstehen, die jedoch durch eine kleine Abflachung 8 beseitigt ist, um die Gefahr von Verletzungen und einer Beschädigung der Spitze zu vermeiden.

Der Keilkörper ist von einem Durchgangsloch 9 durchbrochen, das eine Ansenkung 9a für die Aufnahme eines Schraubenkopfes aufweist (vgl. Fig. 13). Der Keilkörper besteht aus Aluminium.

Die der Schmalseite 7 gegenüberliegende, längere Schmalseite ist mit 38 und die der Breitfläche 5 gegenüberliegende, kleinere Breitfläche mit 39 bezeichnet (Fig. 9, 10, 12).

Der mit dem Keil 1 zusammenwirkende Keil 2 ist spiegelbildlich zu irgendeiner der Seitenflächen des Keilkörpers ausgebildet, z.B. spiegelbildlich zu der Schmalseite 7. Zwei zusammenwirkende Keile können so hergestellt werden, daß ein Rechteckprofil schräg durchgesägt wird, wobei gleichzeitig an beiden Keilen Keilflächen entstehen.

An jeder seitlichen Stirnfläche jedes Informationsträgers $T_1$, $T_2$, $T_3$ ist ein Profil 11 von im wesentlichen winkelförmigem Querschnitt befestigt. An jedem Pfosten $P_1$, $P_2$ ist ein weiteres winkelförmiges Profil 12 befestigt, das zusammen mit dem Profil 11 einen Hohlraum 13 umschließt, in dem die Keile 1, 2 liegen. Dieser Hohlraum entsteht erst nach Herstellung der Steckverbindung.

Das Profil 11 ist im wesentlichen winkelförmig und hat einen Befestigungsschenkel 14 und einen Seitenwandschenkel 15. Am Befestigungsschenkel 14 befindet sich ein leistenförmiger Vorsprung 16, der in eine Nut 17 eingreift, die sich am Informationsträger $T_1$ befindet, nämlich an einer Kappe 18, die die seitliche Stirnfläche des Informationsträgers bildet. Am freien Rand des Befestigungsschenkels 14 befindet sich eine Ausnehmung 19 (Falz). Am Seitenwandschenkel 15 befindet sich eine Randleiste 20 für den Eingriff in das Profil 12. Die Innenfläche 14a des Befestigungsschenkels bildet eine erste Arretierungsfläche und die Innenfläche 15a des Seitenwandschenkels 15 eine weitere Arretierungsfläche.

Das Profil 12 hat einen Befestigungsschenkel 21 und einen Seitenwandschenkel 22. Am Seitenwandschenkel 22 befindet sich eine Randleiste 23 für den Eingriff in die Ausnehmung 19 des Profils 11.

Der Befestigungsschenkel 21 hat eine hohlzylindrische Anlagefläche 24, die an die zylindrische Umfangsfläche 25 des Pfostens $P_1$ angepaßt ist. Am Befestigungsschenkel 21 befindet sich eine Ausnehmung 26 (Falz) für den Eingriff der Randleiste 20 des Profils 11. Die Innenfläche 21a des Befestigungsschenkels 21 und die Innenfläche 22a des Seitenwandschenkels 22 bilden wiederum Arretierungsflächen.

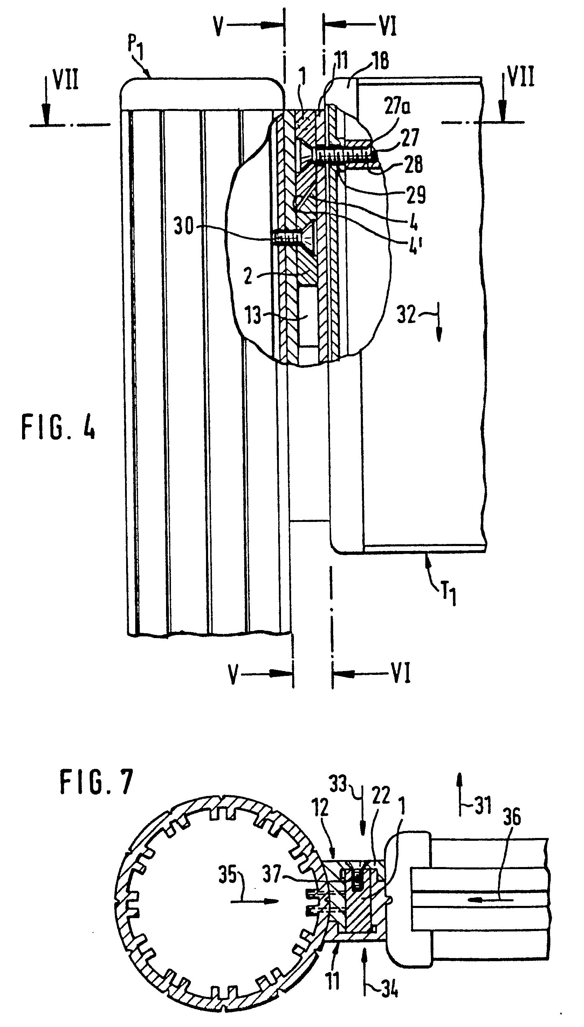

Die Verbindung der Keile mit dem zugeordneten Profil sowie die Verbindung der Profile mit dem zugeordneten Bauteil der Informationstafel ist aus Fig. 4 ersichtlich.

Der Keil 1 ist von einer selbstschneidenden Schraube 27 durchgriffen und mit ihrem Gewindeteil 27a in den Informationsträger $T_1$ eingeschraubt, zu welchem Zweck im Informationsträger ein Schraubkanal 28 vorgesehen ist. Die Schraube 27 durchgreift ein Durchgangsloch 29 in der Kappe 18. Mit der Schraube 27 werden also sozusagen vier Teile miteinander verbunden, nämlich der Teil 1, das Profil 11, die Kappe 18 und der Grundkörper des Informationsträgers $T_1$.

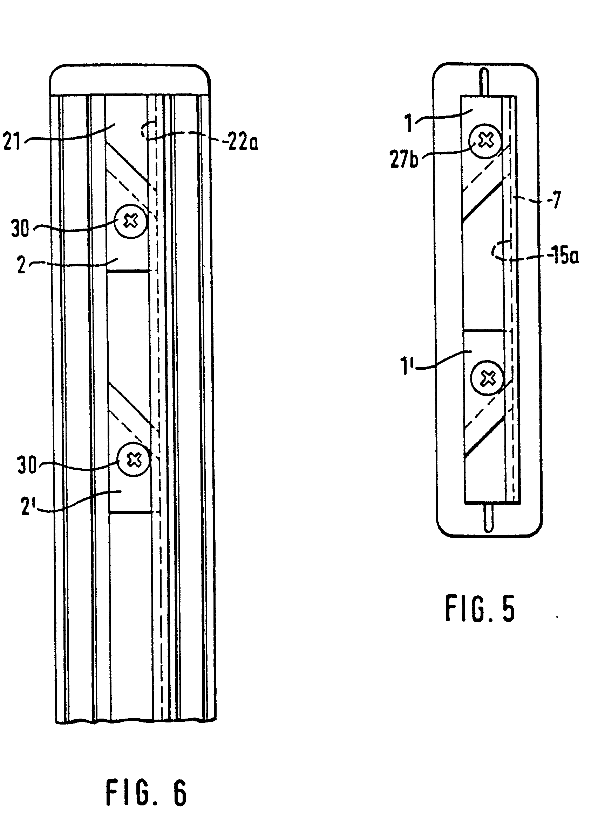

Der Schraubenkopf 27b liegt in der Ansenkung 9a des Keiles 1. Der Keil liegt mit seiner Schmalseite 7 an der Innenfläche 15a des Seitenwandschenkels 15 des Profils 11 an. Die gegenüberliegende Schmalseite fluchtet mit der Außenfläche des Befestigungsschenkels 14. Dies ist aus Fig. 5 ersichtlich. Fig. 5 zeigt auch, daß unterhalb des Keiles 1 ein weiterer Keil 1' angeordnet ist. Dieser ist gleich ausgebildet wie der Keil 1 und auch gleich orientiert.

Am Pfosten $P_1$ ist ein Keil 2 mittels einer selbstschneidenden Schraube 30 befestigt. Die Schraube 30 ist durch den Keil 2 hindurchgesteckt und in ein vorgebohrtes Loch in der Pfostenwand eingedreht. Wie Fig. 6 zeigt, liegt der Keil 2 mit seiner kurzen Schmalseite an der Innenwand 22a des Seitenwandschenkels 22 an. Die gegenüberliegende lange Schmalseite fluchtet mit der Außenfläche des Befestigungsschenkels 21.

Unterhalb des Keiles 2 ist ein weiterer Keil 2' befestigt, wobei der Abstand zwischen den Keilen 2, 2' gleich groß wie der Abstand zwischen den Keilen 1, 1' ist. Mit den Schrauben 30 werden drei Teile miteinander verbunden, nämlich die Keile 2, 2' mit dem Profil 12 und das Profil 12 mit dem Pfosten $P_1$.

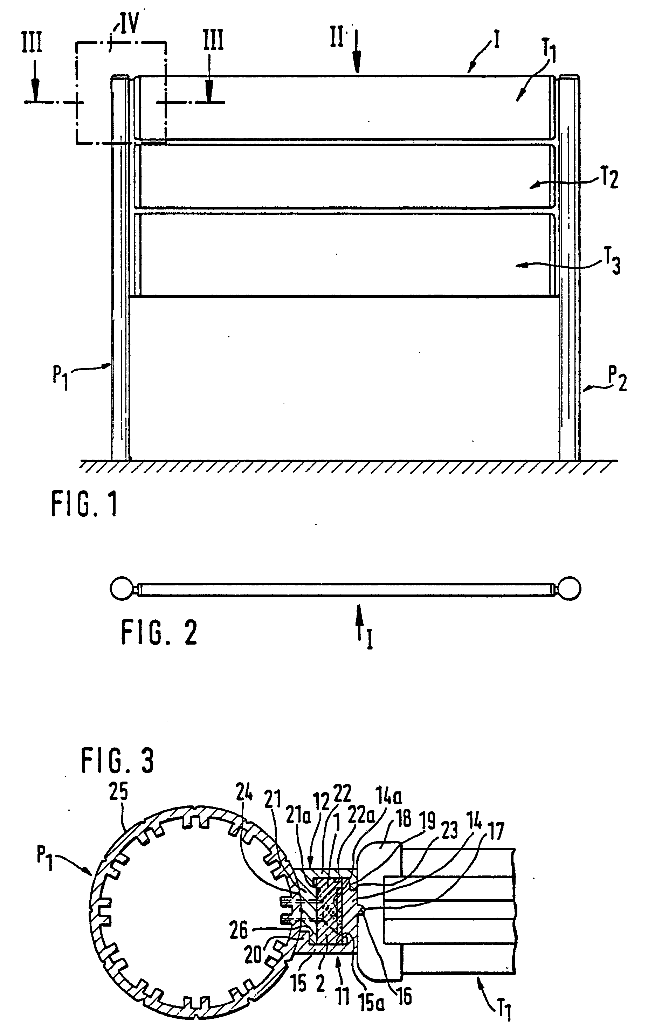

Bei der Verbindung der Informationsträger $T_1$, $T_2$, $T_3$ mit den Pfosten $P_1$, $P_2$ wird wie folgt vorgegangen. Begonnen wird mit der Montage des untersten Informationsträgers $T_3$, wonach der Informationsträger $T_2$ und schließlich der Informationsträger $T_1$ befestigt wird. Hierbei ist zunächst eine horizontale Bewegung des Informationsträgers in Richtung des Pfeiles 31 (siehe Fig. 7) erforderlich, wobei sich der Informationsträger in einer solchen Höhenlage befindet, daß die Keile 1, 1' am Informationsträger (z.B. $T_1$) die Keile 2, 2' am Pfosten $P_1$ (und natürlich am Pfosten $P_2$) passieren können. Am Ende der horizontalen Bewegung sind die Profile 11, 12 so ineinandergerastet, wie dies die Fig. 3 und 7 zeigen. Danach wird der Informationsträger parallel zu den Pfosten $P_1$, $P_2$ nach unten bewegt in Richtung des Pfeiles 32 in Fig. 4. Zur Klarstellung sei bemerkt, daß in Fig. 4 bereits der Zustand am Ende der Abwärtsbewegung dargestellt ist. Bei dieser Abwärtsbewegung kommen schließlich die Keilflächen 4 der Keile 1, 1' mit den Keilflächen 4' der Keile 2, 2' in Berührung. Wegen der besonderen Neigung der Keilflächen 4, 4' entsteht eine Verkeilung sozusagen in zwei Richtungen. Durch diese Verkeilungswirkung werden einmal die Profile 11, 12 in Richtung der in Fig. 7 eingezeichneten Pfeile 33, 34 zusammengezogen und zum anderen in Richtung der Pfeile 35, 36. Hierdurch wird ein wackelfreier Sitz erzielt.

Zur Sicherung gegen Abheben der Informationsträger $T_1$, $T_2$, $T_3$ kann der oberste Informationsträger $T_1$ durch eine Arretierungsschraube 37 gesichert werden. Die Arretierungsschraube 37 ist durch den Seitenwandschenkel 22 des Profils 12 hindurchgesteckt und in den Keil 1 eingeschraubt. Ein Herausheben des obersten Informationsträgers $T_1$ ist erst nach Entfernung der Arretierungsschraube 37 möglich. Durch die Sicherung des obersten Informationsträgers $T_1$ sind auch die darunter befindlichen Informationsträger $T_2$ und $T_3$ gesichert, da diese nicht so weit angehoben werden können, daß sich die zusammenwirkenden Keile der Keilverbindungen voneinander lösen lassen.

Zur Klarstellung sei bemerkt, daß eine Verkeilung auch dann erreicht wird, wenn nur einer der Keile Abstützflächen für seine Seitenflächen vorfindet. So könnte an einem der Profile 11, 12 der Seitenwandschenkel 15 bzw. 22 weggelassen werden. Für den mechanischen Schutz der Keilverbindung und auch für das Aussehen der gesamten Informationstafel I ist es jedoch vorteilhaft, wenn Profile 11, 12 verwendet werden, die sich zu einem Kanal ergänzen.

Es wäre sogar möglich, einen der Keile sozusagen ohne Anlagefläche auf der Schmalseite anzuordnen. Er würde sich dann an die beiden Anlageflächen, z.B. die Anlageflächen 14a, 15a anpressen. Die Anlageflächen müssen auch nicht Teile von Profilen sein, sondern können z.B. durch Vorsprünge am Keil selber gebildet sein.

**Patentansprüche**

1. Steckverbindung, bei der die zu verbindenden Teile durch Keilwirkung zusammengehalten werden, mit zwei miteinander zusammenwirkenden Keilen (1, 2 bzw. 1', 2'), deren Keilflächen (4, 4') durch eine Steckbewegung zur Anlage aneinander bringbar sind, wobei mindestens ein Keil relativ zu zwei winklig zueinander stehenden Arretierungsflächen (14a, 15a bzw. 21a, 22a) feststehend angeordnet ist, dadurch gekennzeichnet, daß die Keilfläche (4, 4') mit jeder der beiden Arretierungsflächen (14a, 15a bzw. 21a, 22a) einen spitzen Winkel einschließt, wobei in der Verriegelungsstellung der relativ zu den beiden Arretierungsflächen (14a, 15a bzw. 21a, 22a) bewegliche Keil mit an ihm befindlichen Anlageflächen (38, 5) an den Arretierungsflächen (14a, 15a bzw. 21a, 22a) anliegt.

2. Steckverbindung nach Anspruch 1, dadurch gekennzeichnet, daß die spitzen Winkel bezüglich beiden Arretierungsflächen (14a, 15a bzw. 21a, 22a) gleich sind.

3. Steckverbindung nach einem der vorhergehenden Ansprüche, dadurch gekennzeichnet, daß die spitzen Winkel im Bereich von 30° bis 60° liegen, vorzugsweise ca. 45° betragen.

4. Steckverbindung nach einem der vorhergehenden Ansprüche, dadurch gekennzeichnet, daß die Arretierungsflächen (14a, 15a bzw. 21a, 22a) rechtwinklig zueinander stehen.

5. Steckverbindung nach einem der vorhergehenden Ansprüche, dadurch gekennzeichnet, daß mindestens ein Keil, vorzugsweise beide Keile (1, 2), mit je einem Profil (11, 12), vorzugsweise einem Aluminiumprofil, verbunden sind, das die Arretierungsflächen (14a, 15a bzw. 21a, 22a) bildet.

6. Steckverbindung nach Anspruch 5, dadurch gekennzeichnet, daß sich die Profile zu einem Kanal (13) ergänzen, in dem die Keile (1, 2) liegen.

7. Steckverbindung nach Anspruch 6, dadurch gekennzeichnet, daß die Profile (11, 12) im wesentlichen einen winkelförmigen Querschnitt aufweisen, wobei jeder Winkelschenkel (14, 15, 21, 22) eine Wand eines im wesentlichen rechteckigen Kanals (13) bildet und die Innenseiten (14a, 15a, 21a, 22a) der Kanalwände (14, 15, 21, 22) als Arretierungsflächen dienen.

8. Steckverbindung nach Anspruch 7, dadurch gekennzeichnet, daß Winkelschenkel (15, 22) zusammengefügter Profile (11, 12) mit einer Randleiste (20, 23) das angrenzende Profil überlappen, wobei vorzugsweise im Überlappungsbereich mindestens ein Winkelschenkel (14, 22) einen Falz (19, 26) aufweist.

9. Steckverbindung nach einem der vorhergehenden Ansprüche, dadurch gekennzeichnet, daß die Keile (1, 2) aus Profilen, vorzugsweise Metallprofilen, vorzugsweise aus Aluminium, von vorzugsweise rechteckigem oder quadratischem Querschnitt bestehen.

10. Steckverbindung nach einem der vorhergehenden Ansprüche, gekennzeichnet durch einen Arretierungsstift, vorzugsweise eine Schraube (37), der das Auseinanderziehen der Keil (1, 2) verhindert.

11. Steckverbindung nach Anspruch 10, dadurch gekennzeichnet, daß der Arretierungsstift (37) ein Bauteil, z.B. ein Profil (12), durchgreift, das mit einem (2) der Keile verbunden ist und in den anderen Keil (1) eingreift.

12. Informationstafel mit Pfosten und mindestens einem tafelförmigen Informationsträger, der an den Pfosten befestigt ist, dadurch gekennzeichnet, daß zur Verbindung der Informationsträger (T₁, T₂, T₃) mit den Pfosten (P₁, P₂) Steckverbindungen nach einem oder mehreren der vorhergehenden Ansprüche vorgesehen sind.

13. Informationstafel nach Anspruch 12, dadurch gekennzeichnet, daß der Informationsträger (T₁, T₂, T₃) an jeder Seitenkante mit zwei oder mehr längs der Seitenkanten gegeneinander versetzten Steckverbindungen mit den angrenzenden Pfosten (P₁, P₂) verbunden ist.

14. Informationstafel nach einem der Ansprüche 12 und 13, dadurch gekennzeichnet, daß die Steckverbindungen nach einem der Ansprüche 5 bis 8 ausgebildet sind, wobei ein Profil (12) am Pfosten (P₁) und das andere Profil (11) an der benachbarten Seitenkante des Informationsträgers (T₁) befestigt ist.

15. Informationstafel nach Anspruch 14, gekennzeichnet durch Befestigungsschrauben (27, 30), die die Keile (1, 2) und die Profile (11, 12) durchgreifen und in einen Pfosten (P₁) bzw. den Informationsträger (T₁) eingeschraubt sind und so gleichzeitig Keile (1, 2) und Profile (11, 12) mit dem Pfosten (P₁) bzw. dem Informationsträger (T₁) verbinden.

## Claims

1. A plug connection, in which the parts to be connected are held together by a wedge effect, comprising two cooperating wedges (1, 2 or 1', 2) whose wedge surfaces (4, 4') can be brought to abut against one another by a plug-in movement, at least one wedge being arranged stationary relative to two stop surfaces (14a, 15a or 21a, 22a) arranged at an angle to one another, characterised in that the wedge surface (4, 4') forms an acute angle with each of the two stop surfaces (14a, 15a or 21a, 22a), the wedge which is movable relative to the two stop surfaces (14a, 15a or 21a, 22a) abutting with its bearing surfaces (38, 5) against the stop surfaces (14a, 15a or 21a, 22a) in the locking position.

2. A plug connection according to claim 1, characterised in that the acute angles in respect of both stop surfaces (14a, 15a or 21a, 22a) are equal.

3. A plug connection according to one of the preceding claims, characterised in that the acute angles are in the region of 30° to 60°, preferably approximately 45°.

4. A plug connection according to one of the preceding claims, characterised in that the stop surfaces (14a, 15a or 21a, 22a) are arranged at right angles to one another.

5. A plug connection according to one of the preceding claims, characterised in that at least one wedge, preferably both wedges (1, 2) are each connected to a profile (11, 12), preferably an aluminium profile, which forms the stop surfaces (14a, 15a or 21a, 22a).

6. A plug connection according to claim 5, characterised in that the profiles combine to form a duct (13), in which the wedges (1, 2) are disposed.

7. A plug connection according to claim 6, characterised in that the profiles (11, 12) essentially have an angular cross section, each angle side (14, 15, 21, 22) forming a wall of a substantially rectangular duct (13) and the inner sides (14a, 15a, 21a, 22a) of the duct walls (14, 15, 21, 22) acting as stop surfaces.

8. A plug connection according to claim 7, characterised in that the angle sides (15, 22) of the joined profiles (11, 12) overlap the adjoining profile with an edge strip (20, 23), at least one angle side (14, 22) preferably comprising a groove (19, 26) in the region of overlap.

9. A plug connection according to one of the preceding claims, characterised in that the wedges (1, 2) are formed by profiles, preferably metal profiles, preferably made of aluminium and preferably having a rectangular or square cross section.

10. A plug connection according to one of the preceding claims, characterised by a stop pin, preferably a screw (37), which prevents the wedges (1, 2) from being pulled apart.

11. A plug connection according to claim 10, characterised in that the stop pin (37) penetrates a component part, e.g. a profile (12), which is connected to one (2) of the wedges and engages in the other wedge (1).

12. An information board with posts and at least one board-shaped information carrier secured to the posts, characterised in that for the connection of the information carrier (T₁, T₂, T₃) with the posts (P₁, P₂) plug connections are provided according to one or more of the preceding claims.

13. An information board according to claim 12, characterised in that the information carrier (T₁, T₂, T₃) is connected with the adjoining posts (P₁, P₂) at each lateral edge by means of two or more plug connections, which are offset relative to one another along the lateral edges.

14. An information board according to one of claims 12 and 13, characterised in that the plug connections are designed according to one of claims 5 to 8, one profile (12) being secured to the post (P₁) and the other profile (11) being secured to the adjoining lateral edge of the information board (T₁).

15. An information board according to claim 14, characterised by secured screws (27, 30) which penetrate through the wedges (1, 2), and the profiles (11, 12) and are screwed into a post (P₁) or the in-

formation board ($T_1$) and thereby simultaneously connect the wedges (1, 2) and profiles (11, 12) with the post ($P_1$) or the information board ($T_1$).

## Revendications

1. Dispositif de fixation dans lequel les parties à réunir sont maintenues ensemble par effet de coin, avec deux coins (1, 2 et 1', 2') coopérant ensemble, dont les surfaces (4, 4') peuvent être amenées à s'appliquer l'une contre l'autre par un mouvement d'enfoncement, un coin au moins étant monté de façon fixe par rapport à deux surfaces d'arrêt (14a, 15a ou 21a, 22a) qui sont disposées sous une certaine inclinaison l'une par rapport à l'autre, caractérisé en ce que la surface d'un coin (4, 4') fait un angle aigu par rapport à chacune des deux surfaces d'arrêt (14a, 15a ou 21a, 22a), le coin déplaçable par rapport aux deux surfaces d'arrêt (14a, 15a ou 21a, 22a) pouvant s'appliquer, dans la position de verrouillage, contre les surfaces d'arrêt (14a, 15a ou 21a, 22a) par des surfaces d'application (38, 5) situées sur lui.

2. Dispositif de fixation selon la revendication 1, caractérisé en ce que les angles aigus existant entre les deux surfaces d'arrêt (14a, 15a ou 21a, 22a) sont égaux.

3. Dispositif de fixation selon l'une des revendications précédentes, caractérisé en ce que les angles aigus sont égaux à des grandeurs comprises dans la gamme de 30° à 60°, et de préférence d'environ 45°.

4. Dispositif de fixation selon l'une des revendications précédentes, caractérisé en ce que les surfaces d'arrêt (14a, 15a ou 21a, 22a) sont situées à angle droit l'une par rapport à l'autre.

5. Dispositif de fixation selon l'une des revendications précédentes, caractérisé en ce qu'au moins un coin, et de préférence les deux coins (1, 2) sont reliés chacun à un profilé (11, 12), de préférence un profilé en aluminium, qui forme les surfaces d'arrêt (14a, 15a ou 21a, 22a).

6. Dispositif de fixation selon la revendication 5, caractérisé en ce que les profilés se complètent pour former un canal (13), dans lequel se trouvent les coins (1, 2).

7. Dispositif de fixation selon la revendication 6, caractérisé en ce que les profilés (11, 12) présentent essentiellement une section transversale de forme coudée, chaque branche du coude (14, 15, 21, 22) formant une paroi d'un canal (13) sensiblement rectangulaire et les côtés intérieurs (14a, 15a, 21a, 22a) des parois du canal (14, 15, 21, 22) servant de surfaces d'arrêt.

8. Dispositif de fixation selon la revendication 7, caractérisé en ce que les branches du coude (15, 22) des profilés assemblés (11, 12) recouvrent par un listel marginal (20, 23) le profilé limitrophe, de préférence une branche du coude au moins (14, 22) présentant une rainure (19, 26) dans la région de recouvrement.

9. Dispositif de fixation selon l'une des revendications précédentes, caractérisé en ce que les coins (1, 2) sont constitués par des profilés, de préférence des profilés métalliques de préférence en aluminium, ayant de préférence une section transversale rectangulaire ou carrée.

10. Dispositif de fixation selon l'une des revendications précédentes, caractérisé par une tige d'arrêt, de préférence une vis (37), qui empêche de séparer les coins (1, 2).

11. Dispositif de fixation selon la revendication 10, caractérisé en ce que la tige d'arrêt (37) traverse un élément de la construction, par exemple un profilé (12) relié avec l'un (2) des coins, et pénétre dans l'autre coin (1).

12. Tableau d'informations comportant des piliers et au moins un support d'information en forme de tableau relié aux piliers, caractérisé en ce qu'il est prévu des dispositifs de fixation selon l'une ou plusieurs des revendications précédentes pour assembler les supports d'informations ($T_1$, $T_2$, $T_3$) avec les piliers ($P_1$, $P_2$).

13. Tableau d'informations selon la revendication 12, caractérisé en ce que le support d'information ($T_1$, $T_2$, $T_3$) est relié aux piliers contigus ($P_1$, $P_2$) sur chaque bord latéral, par deux ou plusieurs dispositifs de fixation décalés selon le long des bords latéraux les uns par rapport aux autres.

14. Tableau d'informations selon l'une des revendications 12 et 13, caractérisé en ce que les dispositifs de fixation sont établis selon l'une des revendications 5 à 8, un profilé (12) étant fixé sur le pilier ($P_1$) et l'autre profilé (11), sur le bord latéral voisin du support d'information ($T_1$).

15. Tableau d'informations selon la revendication 14, caractérisé par des vis de fixation (27, 30) qui traversent les coins (1, 2) et les profilés (11, 12) et qui sont vissées dans un pilier ($P_1$) ou dans le support d'information ($T_1$) et assemblent ainsi en même temps des coins (1, 2) et des profilés (11, 12) avec le pilier ($P_1$) ou le support d'information ($T_1$).

FIG. 1

FIG. 2

FIG. 3

FIG. 4

FIG. 7

21

22a

30

2

30

2'

**FIG. 6**

1

27b

7

15a

1'

**FIG. 5**

# FIG. 8

# FIG. 9

# FIG. 10

# FIG. 11

# FIG. 12

# FIG. 13